Europäisches Patentamt

European Patent Office

Office européen des brevets

(19)

(11) Veröffentlichungsnummer: **0 342 709 B1**

# (12) EUROPÄISCHE PATENTSCHRIFT

(45) Veröffentlichungstag der Patentschrift:
27.03.91 Patentblatt 91/13

(51) Int. Cl.$^5$: **G05D 23/13, F16K 11/07**

(21) Anmeldenummer: **89109203.3**

(22) Anmeldetag: **22.05.89**

(54) **Sanitäres Mischventil mit Thermostatregelung.**

(30) Priorität: **20.05.88 DE 3817277**

(43) Veröffentlichungstag der Anmeldung:
**23.11.89 Patentblatt 89/47**

(45) Bekanntmachung des Hinweises auf die
Patenterteilung:
**27.03.91 Patentblatt 91/13**

(84) Benannte Vertragsstaaten:
**AT BE CH DE ES FR GB GR IT LI NL SE**

(56) Entgegenhaltungen:
**DE-A- 3 525 052**
**GB-A- 2 089 003**
**US-A- 4 381 073**
**US-A- 4 738 393**

(73) Patentinhaber: **IDEAL-STANDARD GMBH**
**Euskirchener Strasse 80**
**W-5300 Bonn 1 (DE)**

(72) Erfinder: **Bergmann, Konrad Dr.-Ing.**
**Zur Philippsburg 70**
**W-5560 Wittlich (DE)**

(74) Vertreter: **Gesthuysen, Hans Dieter, Dipl.-Ing.**
**et al**
**Patentanwälte Gesthuysen + von Rohr**
**Huyssenallee 15 Postfach 10 13 33**
**W-4300 Essen 1 (DE)**

## Beschreibung

Die Erfindung betrifft ein sanitäres Mischventil mit Thermostatregelung, mit einem Betätigungsorgan, mit einer feststehenden Ventilsitzscheibe, mit einem auf der Ventilsitzscheibe zur Mengensteuerung verschiebbaren Scheibenpaket und mit einem temperaturabhängigen Regelelement, wobei die Ventilsitzscheibe eine Warmwassereinlauföffnung und eine Kaltwassereinlauföffnung aufweist, wobei das Scheibenpaket aus einer unteren Führungsscheibe, einer oberen Führungsscheibe und einer zwischen der unteren Führungsscheibe und der oberen Führungsscheibe vorgesehenen Regelscheibe besteht, wobei die untere Führungsscheibe und die Regelscheibe mit Warmwassereinlauföffnung und der Kaltwassereinlauföffnung der Ventilsitzscheibe kommunizierende Durchtrittsöffnungen und die obere Führungsscheibe mit den Durchtrittsöffnungen der Regelscheibe kommunizierende Druckausgleichskammern aufweisen und wobei die Regelscheibe in einer Ebene parallel zur Oberfläche der Führungsscheiben zur Temperatursteuerung mittels des Betätigungsorgans in eine temperaturbestimmende Ausgangslage einstellbar und zur Temperaturregelung mittels des temperaturabhängigen Regelelementens steuerbar ist.

Bei dem bekannten sanitären Mischventil, von dem die Erfindung ausgeht (vgl. die US-A-4,738,393 bzw. die DE-A 1-35 25 052), ist das temperaturabhängige Regelelemente im wesentlichen außerhalb des der Mengensteuerung sowie der Temperatursteuerung und -regelung dienenden Scheibenpaket im Wasserraum für das abströmende Mischwasser angeordnet, wenngleich es auf die zwischen den Führungsscheiben des Scheibenpaketes angeordnete, federbelastete Regelscheibe wirkt und mit dem Scheibenpaket eine Funktions- und Baueinheit bildet. Daraus resultiert, daß die Temperaturregelung mittels des temperaturabhängigen Regelelements relativ träge ist.

Der Erfindung liegt folglich die Aufgabe zugrunde, das bekannte sanitäre Mischventil, von dem die Erfindung ausgeht, so zu verbessern, daß die Regelscheibe mittels des temperaturabhängigen Regelelements schneller und feinfühliger gesteuert wird, so daß die eingestellte Mischwassertemperatur ohne fühlbare Schwankungen konstant gehalten wird.

Das erfindungsgemäße sanitäre Mischventil, bei dem die zuvor hergeleitete und aufgezeigte Aufgabe gelöst ist, ist nun dadurch gekennzeichnet, daß in der Regelscheibe mindestens eine mit den Durchtrittsöffnungen der unteren Führungsscheibe und/oder mit den Druckausgleichskammern der oberen Führungsscheibe kommunizierende Mischkammer vorgesehen und das temperaturabhängige Regelelement in der Mischkammer der Regelscheibe und/oder in einer mit der Mischkammer kommunizierenden Ausnehmung der Regelscheibe angeordnet ist und daß Teilmengen des Kalten Wassers und des warmen Wassers in die Mischkammer intreten und das Mischwasser das Regelelement umströmt. Bei dem erfindungsgemäßen sanitären Mischventil ist in der Regelscheibe also zusätzlich zu den Durchtrittsöffnungen mindestens eine Mischkammer vorgesehen. Vorzugsweise sind in der Regelscheibe eine mit den Durchtrittsöffnungen der unteren Führungsscheibe kommunizierende Mischkammer und eine mit den Druckausgleichskammern der oberen Führungsscheibe kommunizierende Mischkammer vorgesehen, münden die beiden Mischkammern in eine Ausnehmung der Regelscheibe und ist das temperaturabhängige Regelelement in den Mischkammern oder in der Ausnehmung der Regelscheibe angeordnet.

Bei dem erfindungsgemäßen Mischventil wird mindestens eine Teilmenge des kalten Wassers und des warmen Wassers in der Regelscheibe selbst gemischt und das Mischwasser auf kurzem Wege unmittelbar an das temperaturabhängige Regelelement gebracht, so daß bei Abweichungen der Mischwassertemperatur vom eingestellten Sollwert sofort eine vom Regelelement ausgelöste Steuerung der Regelscheibe relativ zu den beiden Führungsscheiben erfolgt.

Im folgenden werden die Erfindung und durch die Erfindung erreichte Vorteile in Verbindung mit einem in der Zeichnung dargestellten Ausführungsbeispiel erläutert ; es zeigen

Fig. 1 einen Längsschnitt durch eine bevorzugte Ausführungsform eines erfindungsgemäßen sanitären Mischventils,

Fig. 1a in einer Explosionsdarstellung, die feststehende Ventilsitzscheibe, die untere Führungsscheibe, die Regelscheibe, das temperaturabhängige Regelelement und die obere Führungsscheibe des Mischventils nach Fig. 1,

Fig. 2 einen Schnitt durch das sanitäre Mischventil nach Fig. 1 längs der Linie II-II,

Fig. 3a jeweils von oben gesehen, die Ventilsitzscheibe, die untere Führungsscheibe, die Regelscheibe und die obere Führungsscheibe des sanitären Mischventils nach Fig. 1, die Regelscheibe geringfügig gegenüber der Darstellung in Fig. 1a geändert,

Fig. 3b jeweils von unten gesehen, die Ventilsitzscheibe, die untere Führungsscheibe, die Regelscheibe und die obere Führungsscheibe, die in Fig. 3a von oben gesehen dargestellt sind, und

Fig. 4 schematisch, das aus der unteren Führungsscheibe, der Regelscheibe und der oberen Führungsscheibe bestehende Scheibenpaket mit den realisierten Wasserwegen.

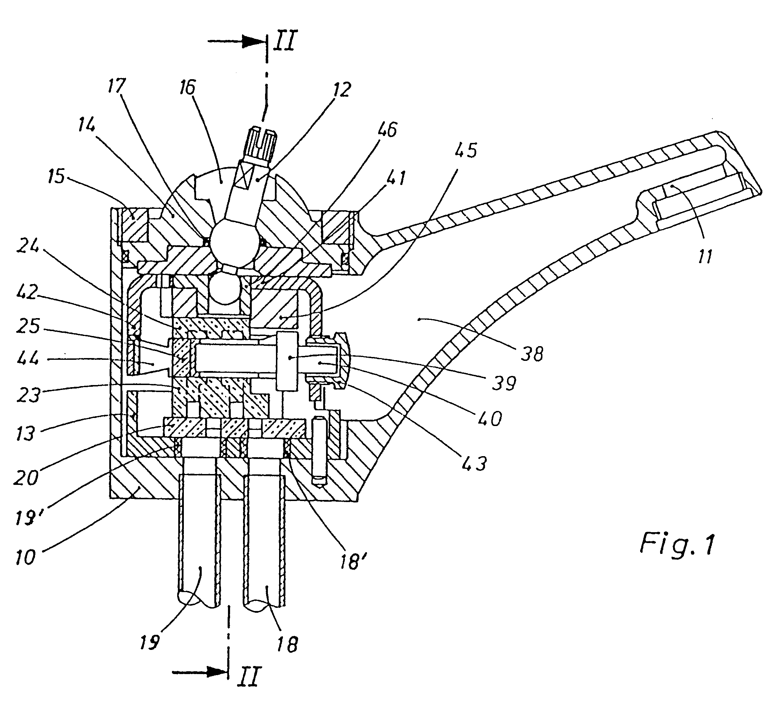

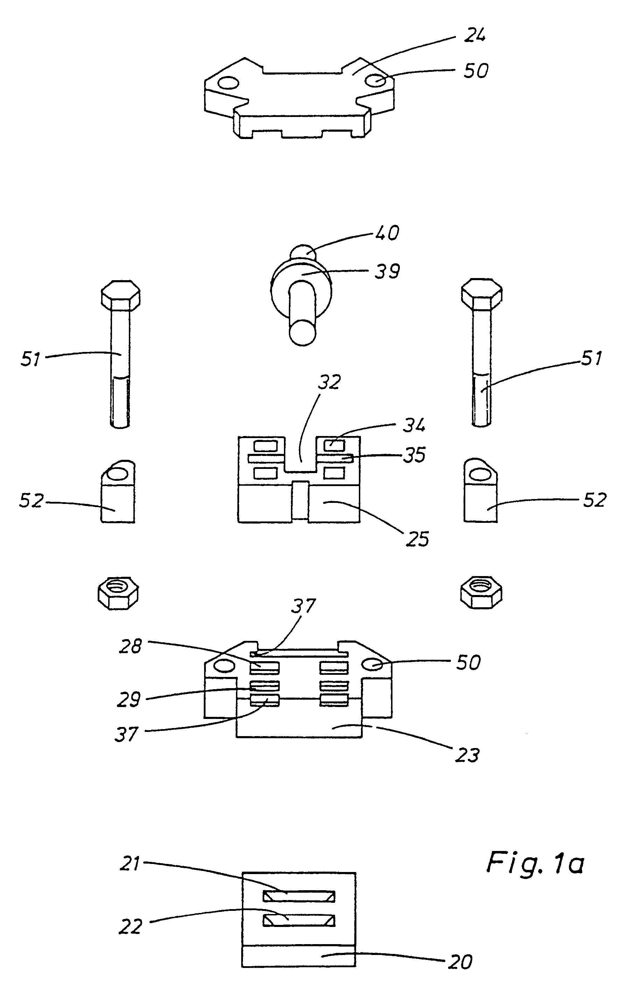

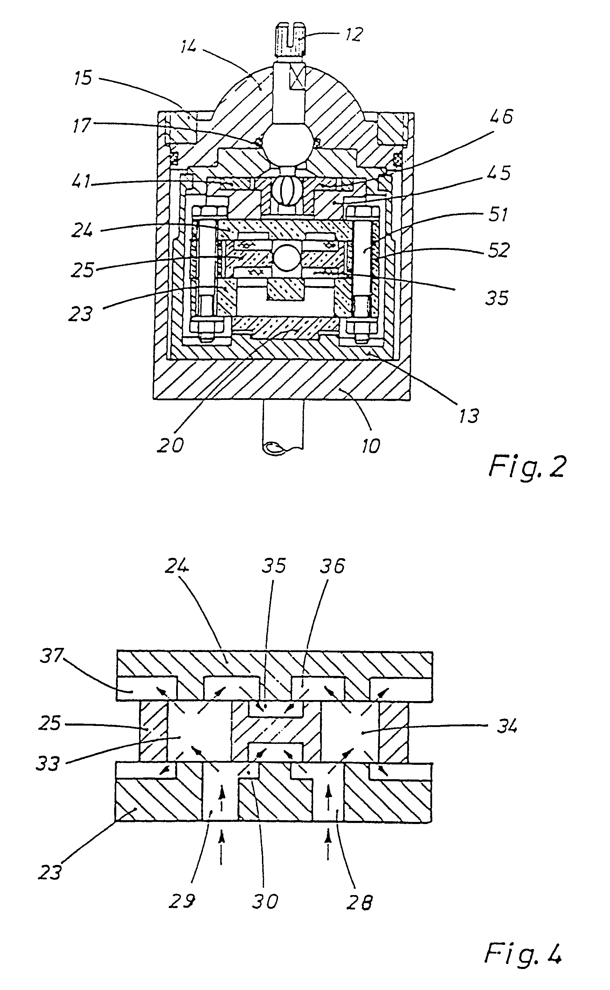

Das in den Fig. 1 und 2 dargestellte sanitäre Mischventil weist zunächst einen Ventilkörper 10 mit einem Wasserauslauf 11 und ein Betätigungsorgan mit einem Betätigungshebel 12 und einem auf den Betätigungshebel 12 aufsetzbaren, nicht dargestellten Betätigungsgriff auf. In den Ventilkörper 10 ist ein Kartuschengehäuse 13 eingesetzt. Oberhalb des Kartuschengehäuses 13 ist ein Ventilkörperdeckel 14 vorgesehen, der mittels eines Halteringes 15 im Ventilkörper 10 festgelegt ist. Der Ventilkörperdeckel 14 weist eine Betätigungsöffnung 16 auf, durch die der Betätigungshebel 12 greift. Am Fuß der Betätigungsöffnung 16 ist ein O-Ring 17 vorgesehen, so daß der Betätigungshebel 12 abgedichtet beweglich ist. Am Boden des Ventilkörpers 10 sind eine Warmwasserzuleitung 18 und eine Kaltwasserzuleitung 19 angeschlossen. Zu den die Warmwasserzuleitung 18 und die Kaltwasserzuleitung 19 aufnehmenden Durchtrittsöffnungen im Boden des Ventilkörpers 10 korrespondieren Durchtrittsöffnungen im Boden des Kartuschengehäuses 13. In den im Boden des Kartuschengehäuses 13 vorgesehenen Durchtrittsöffnungen sind Dichtungen 18' und 19' eingesetzt.

Auf dem Boden des Kartuschengehäuses 13 ist zunächst eine Ventilsitzscheibe 20 mit einen Warmwassereinlauföffnung 21 und einer Kaltwassereinlauföffnung 22 festgelegt. Auf der Ventilsitzscheibe 20 ist ein Scheibenpaket angeordnet, das insgesamt zur Mengensteuerung mit Hilfe des Betätigungsorgans, also mit Hilfe des Betätigungshebels 12 gegenüber der Ventilsitzscheibe 20 verschiebbar ist. Das Scheibenpaket besteht aus einer unteren Führungsscheibe 23, einer oberen Führungsscheibe 24 und einen zwischen der unteren Führungsscheibe 23 und der oberen Führungsscheibe 24 vorgesehenen Regelscheibe 25. Die untere Führungsscheibe 23 weist mit der Warmwassereinlauföffnung 21 und der Kaltwassereinlauföffnung 22 der Ventilsitzscheibe 20 kommunizierende Durchtrittsöffnungen 28, 29 auf, denen in der Regelscheibe 25 Durchtrittsöffnungen 33, 34 zugeordnet sind, - so daß auch die Durchtrittsöffnungen 33, 34 der Regelscheibe 25 - in Abhängigkeit von der Stellung des Scheibenpakets zur Ventilsitzscheibe 20 - mit der Warmwassereinlauföffnung 21 und der Kaltwassereinlauföffnung 22 in der Ventilsitzscheibe 20 kommunizieren können. Des weiteren ist die obere Führungsscheibe 24 mit den Durchtrittsöffnungen 33, 34 der Regelscheibe 25 zugeordneten Druckausgleichskammern 36 versehen. Die Druckausgleichskammern 36 der oberen Führungsscheibe 24 können - in Abhängigkeit von der Stellung der Regelscheibe 25 - mit den Durchtrittsöffnungen 33, 34 der Regelscheibe und den Durchtrittsöffnungen 28, 29 der unteren Führungsscheibe 23 und - in Abhängigkeit von der Stellung des Scheibenpakets relativ zur Ventilsitzscheibe 20 -mit der Warmwassereinlauföffnung 21 und der Kaltwassereinlauföffnung 22 in der Ventilsitzscheibe 20 kommunizieren. Schließlich ist als weiteres funktionsnotwendiges Bauelement noch ein temperaturabhängiges Regelelement 39 vorgesehen.

Wie bereits ausgeführt, ist die Regelscheibe 25 zur Temperatursteuerung mittels des Betätigungsorgans, also mittels des Betätigungshebels 12 relativ zu den Führungsscheiben 23, 24 in eine temperaturbestimmende Ausgangsstellung einstellbar. Darüber hinaus ist die Regelscheibe 25 zur Temperaturregelung mittels des temperaturabhängigen Regelelements 39 relativ zu den Führungsscheiben 23, 24 steuerbar.

Bei dem in Rede stehenden sanitären Mischventil ist also einerseits eine Mengensteuerung, andererseits eine Temperatursteuerung und -regelung verwirklicht. Die Mengensteuerung erfolgt durch eine lineare Verschiebung des gesamten Scheibenpakets relativ zu der Ventilsitzscheibe 20, und zwar mit Hilfe des Betätigungsorgans und damit mit Hilfe des Betätigungshebels 12. Die Temperatursteuerung erfolgt ebenfalls durch eine lineare Verschiebung, und zwar der Regelscheibe 25 relativ zu den Führungsscheiben 23, 24, wiederum mit Hilfe des Betätigungsorgans und damit mit Hilfe des Betätigungshebels 12. Die Temperaturregelung schließlich erfolgt auch durch eine lineare Verschiebung, und zwar, wie bei der Temperatursteuerung, durch eine lineare Verschiebung der Regelscheibe 25 relativ zu den Führungsscheiben 23, 24, jedoch mit Hilfe des temperaturabhängigen Regelelements 39.

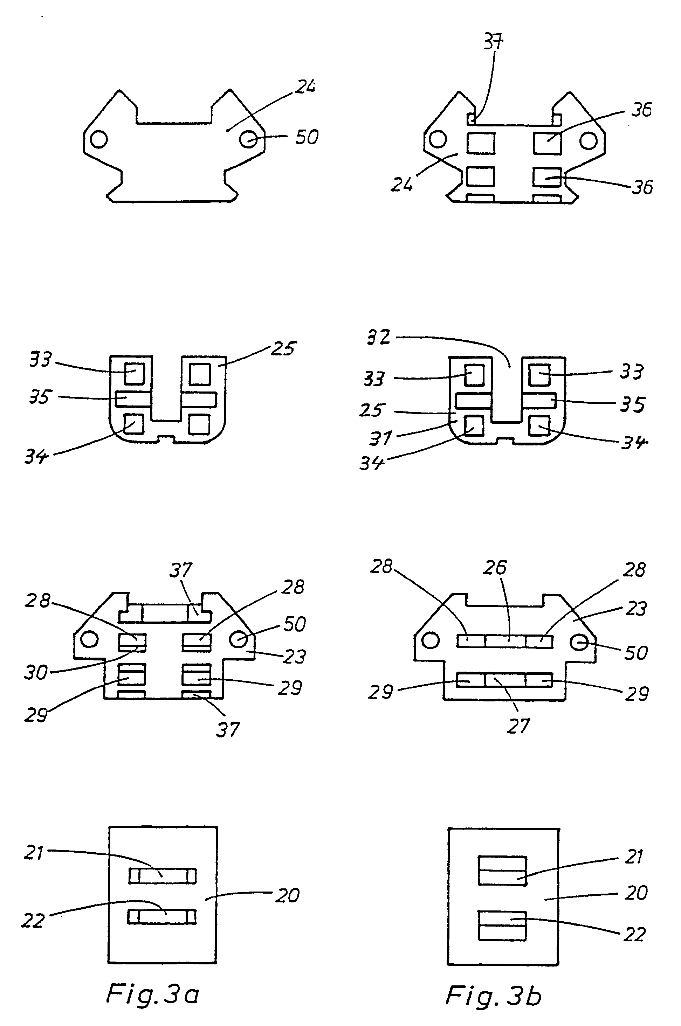

Erfindungsgemäß ist in der Regelscheibe mindestens eine mit den Durchtrittsöffnungen der unteren Führungsscheibe und/oder mit den Druckausgleichskammern der oberen Führungsscheibe kommunizierende Mischkammer vorgesehen und das temperaturabhängige Regelelement in der Mischkammer der Regelscheibe und/oder in einer mit der Mischkammer kommunizierenden Ausnehmung der Regelscheibe angeordnet. Für das dargestellte Ausführungsbeispiel gilt, wie insbesondere die Fig. 1, 1a, 3a und 3b zeigen, daß in der Regelscheibe 25 eine mit den Durchtrittsöffnungen 28, 29 der unteren Führungsscheibe 23 kommunizierende Mischkammer 35 und eine mit den Druckausgleichskammern 36 der oberen Führungsscheibe 24 kommunizierende Mischkammer 35 vorgesehen sind, die beiden Mischkammern 35 in eine Ausnehmung 32 der Regelscheibe 25 münden und das temperaturabhängige Regelelement 39 in der Ausnehmung 32 der Regelscheibe 25 angeordnet ist. Im übrigen ist, wie nur in Fig. 2 angedeutet, in die Mischkammern 35 Gewebematerial eingelegt, das einerseits der besseren Durchmischung des kalten Wassers und des warmen Wassers dient, andererseits eine Geräuschreduzierung bewirkt.

Im dargestellten Ausführungsbeispiel weisen die untere Führungsscheibe 23 und die Regelscheibe 25 jeweils vier Durchtrittsöffnungen 28 bzw. 29 und 33 bzw. 34 auf und kommunizieren jeweils zwei Durchtrittsöffnungen 28 bzw. 29 der unteren Führungsscheibe 23 mit der Warmwassereinlauföffnung 21 bzw. der Kaltwassereinlauföffnung 22 der Ventilsitzscheibe 20. Im einzelnen weist die untere Führungsscheibe 23 auf ihrer der Ventilsitzscheibe 20 zugewandten Seite der Warmwassereinlauföffnung 21 und den Kaltwassereinlauföffnung 22 der Ventilsitzscheibe 20 zugeordnete Einlaufschlitze 26, 27 auf und geht von den äußeren Enden der Einlaufschlitze 26, 27 jeweils eine Durchtrittsöffnung 28, 29 ab (vgl. Fig. 3b). Die Durchtrittsöffnungen 28, 29 der unteren Führungsscheibe 23 weisen auf ihrer der Regelscheibe 25 zugewandten Seite Erweiterungen 30 auf (vgl. Fig. 3a), die mit den unteren Mischkammern 35 der Regelscheibe 25 kommunizieren. Da im dargestellten Ausführungsbeispiel die untere Führungsscheibe 23 und die Regelscheibe 25 jeweils vier Durchtrittsöffnungen 28 bzw. 29 und 33 bzw. 34 aufweisen, weist die obere Führungsscheibe 24 auf ihrer der Regelscheibe 25. zugewandten Seite vier Druckausgleichskammern 36 auf, nämlich den vier Durchtrittsöffnungen 33, 34 der Regelscheibe 25 zugeordnete Druckausgleichskammern 36 (vgl. Fig. 3b).

Für das dargestellte Ausführungsbeispiel eines erfindungsgemäßen sanitären Mischventils gilt weiter, daß die untere Führungsscheibe 23 und die obere Führungsscheibe 24 auf ihren der Regelscheibe 25 zugewandten Seiten jeweils - weitere - Druckausgleichskammern 37 für Teilmengen des kalten Wassers und des warmen Wassers aufweisen und die Druckausgleichskammern 37 auf den äußeren Begrenzungskanten der unteren Führungsscheibe 23 und der oberen Führungsscheibe 24 vorgesehen und nach außen offen sind.

Im dargestellten Ausführungsbeispiel ist, wie insbesondere die Fig. 1 und 1a zeigen, das temperaturabhängige Regelelement 39 zylindrisch ausgebildet und mit einem Kolben 40 versehen und ist, wie die Fig. 1a, 3a und 3b zeigen, die Regelscheibe 25 U-förmig ausgeführt, wobei die U-Schenkel 31 die Ausnehmung 32 begrenzen und in den U-Schenkeln 31 die Durchtrittsöffnungen 33 und 34 sowie die Mischkammern 35 ausgebildet sind.

Eingangs ist bereits ausgeführt, daß bei dem erfindungsgemäßen sanitären Mischventil die untere Führungsscheibe 23, die obere Führungsscheibe 24 und die Regelscheibe 25 ein Scheibenpaket bilden. Wie dazu die Fig. 1a zeigt, sind die untere Führungsscheibe 23 und die obere Führungsscheibe 24 - mit Hilfe von Durchtrittsöffnungen 50 in den Führungsscheiben 23, 24 durchdringenden Schrauben 51 - unter Zwischenschaltung von Abstandshülsen 52 gegeneinander verspannt, wobei die Länge der Abstandshülsen 52 den für die Verschiebbarkeit der Regelscheibe 25 erforderlichen Abstand zwischen der unteren Führungsscheibe 23 und der oberen Führungsscheibe 24 sicherstellt.

In bezug auf das temperaturabhängige Regelelement 39 ist noch darauf hinzuweisen, daß, wie die Figuren 1 und 2 zeigen, ein das Scheibenpaket übergreifender Bügel 41 vorgesehen ist und zwischen den beiden Bügelschenkeln 42, 43 eine Rückstellfeder 44, die Regelscheibe 25 und das temperaturabhängige Regelelement 39 eingespannt sind. Im einzelnen stützen sich ab die Rückstellfeder 44 am Bügelschenkel 42, die Regelscheibe 25 an der Rückstellfeder 44 und das temperaturabhängige Regelelement 39 einerseits an der Regelscheibe 25 und andererseits - mit seinem Kolben 40 - am Bügelschenkel 43, und zwar an einer am Bügelschenkel 43 vorgesehenen Einstellschraube. Der Bügel 41 ist auf einem formschlüssig mit dem Scheibenpaket festgelegten Steuerkäfig 45 verschiebbar. Dazu greift ein Steuernocken 46 des Betätigungshebels 12 in eine entsprechende Ausnehmung des Bügels 41 ein, wobei der Steuernocken 46 des Betätigungshebels 12 einen Exzenter aufweist, so daß eine Drehbewegung des Betätigungshebels 12 und damit eine Drehbewegung des Steuernockens 46 in eine lineare Verschiebung des Bügels 41 umgesetzt wird. Der Steuernocken 46 des Betätigungshebels 12 und die zugeordnete Ausnehmung des Bügels 41 sind so ausgelegt, daß sich eine sog. Komfortzone ergibt, bei der eine relativ große Drehung des Betätigungshebels 12 nur eine geringe Verschiebung des Bügels 41 und damit eine geringe Änderung der Temperatureinstellung zur Folge hat.

Bei dem erfindungsgemäßen sanitären Mischventil wird eine Teilmenge des kalten Wassers und des warmen Wassers in der Regelscheibe 25 selbst gemischt, und zwar in den Mischkammern 35, und das Mischwasser auf kurzem Wege unmittelbar an das temperaturabhängige Regelelement 39 gebracht, so daß bei Abweichungen der Mischwassertemperatur von den eingestellten Mischwassertemperatur sofort eine vom Regelelement 39 ausgelöste Steuerung der Regelscheibe 25 relativ zu den beiden Führungsscheiben 23, 24 erfolgt.

Da im dargestellten Ausführungsbeispiel des erfindungsgemäßen sanitären Mischventils die untere Führungsscheibe 23 und die obere Führungsscheibe 24 auf ihren der Regelscheibe 25 zugewandten Seiten Druckausgleichskammern 37 für Teilmengen des kalten Wassers und des warmen Wassers aufweisen, also Druckausgleichskammern 37 aufweisen, die nicht mit den Mischkammern 35 der Regelscheibe 25 kommunizieren, besteht die Möglichkeit, durch eine entsprechende Dimensionierung der querschnitte die Teilmengen des kalten und des warmen Wassers, die in die Mischkammern 35 der Regelscheibe 25 gelangen, und die Teilmengen des kalten Wassers und des warmen Wassers, die nicht in die Mischkammern 35 der Regelscheibe 25 gelangen, zueinander festzulegen und damit das Regelverhalten zu bestimmen. Im übrigen kommen natürlich alle Teilmengen des kalten Wassers und des warmen Wassers im Wasserraum 38 des erfindungsgemäßen sanitären Mischventils zusammen. Im Wasserraum 38 findet dann eine weitere Mischung des insgesamt zugeführten Wassers statt, bevor dieses das sanitäre Mischventil über den Wasserauslauf 11 verläßt.

Der Wasserlauf durch das erfindungsgemäße sanitäre Mischventil stellt sich folgendermaßen dar :

Schwenkbewegungen des Betätigungsorgans und damit des Betätigungshebels 12 in der Ebene des Wasserauslaufes 11 bewirken eine Mengensteuerung des durch das Mischventil strömenden Wassers, nämlich dadurch, daß das Scheibenpaket wegen seiner über den Steuerkäfig 45 verwirklichten formschlüssigen Verbindung mit dem Steuernocken 46 des Betätigungshebels 12 auf der Ventilsitzscheibe 20 verschoben wird. Hierbei wirken die Einlaufschlitze 26, 27 der unteren Führungsscheibe 23 mit den Warmwassereinlauföffnung 21 und der Kaltwassereinlauföffnung 22 der Ventilsitzscheibe 20 zusammen, so daß je nach der Stellung des Scheibenpakets relativ zu der Ventilsitzscheibe 20 eine entsprechende Wassermenge durch das Mischventil strömen kann.

Die Temperatursteuerung erfolgt durch eine Drehung des Betätigungsorgans und damit durch eine Drehung des Betätigungshebels 12, wobei die Drehung des Betätigungshebels 12 über den Steuernocken 46 in eine lineare Verschiebung des Bügels 41 und damit in eine lineare Verschiebung der Regelscheibe 25 relativ zu den Führungsscheiben 23, 24 umgesetzt wird. Die relative Lage der Regelscheibe 25 in bezug auf die Führungsscheiben 23 und 24 bestimmt die Mischwassertemperatur.

Teilmengen des kalten Wassers und des warmen Wassers treten in die den Führungsscheiben 23, 24 zugekehrten Mischkammern 35 der Regelscheibe 25 ein. Von den Mischkammern 35 her umströmt das Mischwasser das in der Regelscheibe 25 angeordnete temperaturabhängige Regelelement. Das temperaturabhängige Regelelement 39 steuert über den auf Temperaturänderungen ansprechenden Kolben 40 die Lage der Regelscheibe 25 relativ zu den Führungsscheiben 23, 24.

## Ansprüche

1. Sanitäres Mischventil mit Thermostatregelung, mit einem Betätigungsorgan, mit einer feststehenden Ventilsitzscheibe (20), mit einem auf der Ventilsitzscheibe (20) zur Mengensteuerung verschiebbaren Scheibenpaket und mit einem temperaturabhängigen Regelelement (39), wobei die Ventilsitzscheibe (20) eine Warmwassereinlauföffnung (21) und eine Kaltwassereinlauföffnung (22) aufweist, wobei das Scheibenpaket aus einer unteren Führungsscheibe (23), einer oberen Führungsscheibe (24) und einer zwischen der unteren Führungsscheibe (23) und der oberen Führungsscheibe (24) vorgesehenen Regelscheibe (25) besteht, wobei die untere Führungsscheibe (23) und die Regelscheibe (25) mit der Warmwassereinlauföffnung (21) und der Kaltwassereinlauföffnung (22) der Ventilsitzscheibe (20) kommunizierende Durchtrittsöffnungen (28, 29 ; 33, 34) und die obere Führungsscheibe (24) mit den Durchtrittsöffnungen (33, 34) der Regelscheibe (25) kommunizierende Druckausgleichskammern (36) aufweisen und wobei die Regelscheibe (25) in einer Ebene parallel zur Oberfläche der Führungsscheiben (23, 24) zur Temperatursteuerung mittels des Betätigungsorgans in eine temperaturbestimmende Ausgangslage einstellbar und zur Temperaturregelung mittels des temperaturabhängigen Regelelements (39) steuerbar ist, **dadurch gekennzeichnet,** daß in der Regel- scheibe (25) mindestens eine mit den Durchtrittsöffnungen (28, 29) der unteren Führungsscheibe (23) und/oder mit den Druckausgleichskammern (36) der oberen Führungsscheibe (24) kommunizierende Mischkammer (35) vorgesehen und das temperaturabhängige Regelelement (39) in der Mischkammer (35) der Regelscheibe (25) und/oder in einer mit der Mischkammer (35) kommunizierenden Ausnehmung (32) der Regelscheibe (25) angeordnet ist und daß Teilmengen des Kalten Wassers und des warmen Wassers in die Mischkammer (35) intreten und das Mischwasser das Regelelement (39) umströmt.

2. Sanitäres Mischventil nach Anspruch 1, dadurch gekennzeichnet, daß in der Regelscheibe (25) eine mit den Durchtrittsöffnungen (28, 29) der unteren Führungsscheibe (23) kommunizierende Mischkammer (35) und eine mit den Druckausgleichskammern (36) der oberen Führungsscheibe (24) kommunizierende Mischkammer (35) vorgesehen sind, die beiden Mischkammern (35) in eine Ausnehmung (32) der Regelscheibe (25) münden und das temperaturabhängige Regelelement (39) in den Mischkammern (35) und/oder in der Ausnehmung (32) der Regelscheibe (25) angeordnet ist.

3. Sanitäres Mischventil nach Anspruch 1 oder 2, dadurch gekennzeichnet, daß in die Mischkammer (35) bzw. in die Mischkammern (35) Gewebematerial eingelegt ist.

4. Sanitäres Mischventil nach einem der Ansprüche 1 bis 3, dadurch gekennzeichnet, daß die untere Führungsscheibe (23) und die Regelscheibe (25) jeweils vier Durchtrittsöffnungen (28 bzw. 29 ; 33 bzw. 34) aufweisen und jeweils zwei Durchtrittsöffnungen (28 bzw. 29) mit der Warmwassereinlauföffnung (21) bzw. der Kaltwassereinlauföffnung (22) der Ventilsitzscheibe (20) kommunizieren und daß vorzugsweise die untere Führungsscheibe (23) auf ihrer der Ventilsitzscheibe (20) zugewandten Seite der Warmwassereinlauföffnung (21) und der Kaltwassereinlauföffnung (22) der Ventilsitzscheibe

(20) zugeordnete Einlaufschlitze (26, 27) aufweist und von den äußeren Enden der Einlaufschlitze (26, 27) jeweils eine Durchtrittsöffnung (28, 29) abgeht.

5. Sanitäres Mischventil nach einem der Ansprüche 1 bis 4, dadurch gekennzeichnet, daß die Durchtrittsöffnungen (28, 29) der unteren Führungsscheibe (23) auf ihrer der Regelscheibe (25) zugewandten Seite Erweiterungen (30) aufweisen und die Erweiterungen (30) mit den Mischkammern (35) der Regelscheibe (25) kommunizieren.

6. Sanitäres Mischventil nach Anspruch 4 oder 5, dadurch gekennzeichnet, daß die obere Führungsscheibe (24) auf ihrer der Regelscheibe (25) zugewandten Seite den vier Durchtrittsöffnungen (33, 34) der Regelscheibe (25) zugeordnete Druckausgleichskammern (36) aufweist.

7. Sanitäres Mischventil nach einem der Ansprüche 1 bis 6, dadurch gekennzeichnet, daß die untere Führungsscheibe (23) und die obere Führungsscheibe (24) auf ihren der Regelscheibe (25) zugewandten Seiten jeweils weitere Druckausgleichskammern (37) für Teilmengen des kalten Wassers und des warmen Wassers aufweisen und vorzugsweise die Druckausgleichskammern (37) auf den äußeren Begrenzungskanten der unten Führungsscheibe (23) und der oberen Führungsscheibe (24) vorgesehen und nach außen offen sind.

8. Sanitäres Mischventil nach einem der Ansprüche 1 bis 7, dadurch gekennzeichnet, daß das temperaturabhängige Regelelement (39) vorzugsweise zylindrisch ausgebildet ist und die Regelscheibe (25) U-förmig ausgeführt ist.

9. Sanitäres Mischventil nach einem der Ansprüche 1 bis 8, dadurch gekennzeichnet, daß die untere Führungsscheibe (23) und die obere Führungsscheibe (24) unter Zwischenschaltung von Abstandshülsen (52) gegeneinander verspannt sind und die Länge der Abstandshülsen (52) den für die Verschiebbarkeit der Regelscheibe (25) erforderlichen Abstand zwischen der unteren Führungsscheibe (23) und der oberen Führungsscheibe (24) sicherstellt.

10. Sanitäres Mischventil nach einem der Ansprüche 1 bis 9, dadurch gekennzeichnet, daß ein das Scheibenpaket übergreifender Bügel (41) vorgesehen ist und zwischen den beiden Bügelschenkeln (42, 43) eine Rückstellfeder (44), die Regelscheibe (25) und das temperaturabhängige Regelelement (39) eingespannt sind und vorzugsweise ein Bügelschenkel (43) eine Einstellschraube aufweist.

## Revendications

1. Robinet-mélangeur sanitaire à réglage thermostatique et qui comprend un organe de commande, un disque fixe (20) faisant office de siège de soupape, un ensemble de disques pouvant coulisser sur le disque (20) faisant office de siège de soupape et destiné à la commande quantitative, ainsi qu'un élément de réglage (39) dépendant de la température, le disque (20) faisant office de siège de soupape présentant une ouverture (21) destinée à l'entrée de l'eau chaude et une ouverture (22) destinée à l'entrée de l'eau froide, l'ensemble de disques étant constitué par un disque inférieur de guidage (23), un disque supérieur de guidage (24) et un disque de réglage (25) prévu entre le disque inférieur de guidage (23) et le disque supérieur de guidage (24), le disque inférieur de guidage (23) et le disque de réglage (25) présentant des ouvertures de passage (28, 29 ; 33, 34) qui communiquent avec l'ouverture (21) destinée à l'entrée de l'eau chaude et l'ouverture (22) destinée à l'entrée de l'eau froide, pratiquées dans le disque (20) faisant office de siège de soupape, le disque supérieur de guidage (24) présentant des chambres de compensation de pression (36) qui communiquent avec les ouvertures de passage (33, 34) pratiquées dans le disque de réglage (25), le disque de réglage (25) pouvant être orienté, dans un plan parallèle à la surface des disques de guidage (23, 24), au moyen de l'organe d'entraînement, dans une position de départ à détermination thermique destinée à la commande de la température, et pouvant être commandé pour le réglage de la température au moyen de l'élément de réglage (39) dépendant de la température, **caractérisé en ce que,** dans le disque de réglage (25), on prévoit au moins une chambre de mélange (35) qui communique avec les ouvertures de passage (28, 29) pratiquées dans le disque inférieur de guidage (23) et/ou avec les chambres de compensation (36) du disque supérieur de guidage (24) ; l'élément de réglage (39) dépendant de la température est disposé dans la chambre de mélange (35) du disque de réglage (25) et/ou dans un évidement (32) pratiqué dans le disque de réglage (25) et qui communique avec la chambre de mélange (35) et **en ce que** des quantités partielles de l'eau froide et de l'eau chaude pénètrent dans la chambre de mélange (35) et l'eau mélangée s'écoule autour de l'élément de réglage (39).

2. Robinet-mélangeur sanitaire selon la revendication 1, **caractérisé en ce que,** dans le disque de réglage (25), on prévoit une chambre de mélange (35) qui communique avec les ouvertures de passage (28, 29) pratiquées dans le disque inférieur de guidage (23) et une chambre de mélange (35) qui communique avec les chambres de compensation de pression (36) du disque supérieur de guidage (24), les deux chambres de mélange (35) débouchant dans un évidement (32) pratiqué dans le disque de réglage (25) et l'élément de réglage (39) dépendant de la température étant disposé au sein des chambres de mélange (35) et/ou dans l'évidement (32) pratiqué dans le disque de réglage (25).

3. Robinet-mélangeur sanitaire selon la revendication 1 ou 2, **caractérisé en ce que,** dans la ou les chambre(s) de mélange (35), on insère une matière de tissu.

4. Robinet-mélangeur sanitaire selon une quelconque des revendications 1 à 3, **caractérisé en ce que** le disque inférieur de guidage (23) et le disque de réglage (25) présentent chacun quatre ouvertures de passage (28 ou 29 ; 33 ou 34), deux ouvertures de passage (28 ou 29) communiquant, chaque fois, avec l'ouverture d'entrée d'eau chaude (21) ou l'ouverture d'entrée d'eau froide (22) pratiquée dans le disque (20) faisant office de siège de soupape et **en ce que,** de préférence, le disque inférieur de guidage (23) présente, sur son côté tourné vers le disque (20) faisant office de siège de soupape, des fentes d'entrée (26, 27) correspondant à l'ouverture d'entrée d'eau chaude (21) et à l'ouverture d'entrée d'eau froide (22) pratiquées dans le disque (20) faisant office de siège de soupape, et une ouverture de passage (28, 29) part, chaque fois, des extrémités les plus externes des fentes d'entrée (26, 27).

5. Robinet-mélangeur sanitaire selon l'une quelconque des revendications 1 à 4, **caractérisé en ce que** les ouvertures de passage (28, 29) pratiquées dans le disque inférieur de guidage (23) présentent, sur leur côté tourné vers le disque de réglage (25), des élargissements (30) qui communiquent avec les chambres de mélange (35) du disque de réglage (25).

6. Robinet-mélangeur sanitaire selon la revendication 4 ou 5, **caractérisé en ce que** le disque supérieur de guidage (24) présente, sur son côté tourné vers le disque de réglage (25), les chambres de compensation de pression (36) correspondant aux quatre ouvertures de passage (33, 34) pratiquées dans le disque de réglage (25).

7. Robinet-mélangeur sanitaire selon l'une quelconque des revendications 1 à 6, **caractérisé en ce que** le disque inférieur de guidage (23) et le disque supérieur de guidage (24) présentent, sur leurs côtés tournés vers le disque de réglage (25), chacun, des chambres de compensation de pression supplémentaires (37) destinées à des quantités partielles de l'eau froide et de l'eau chaude et, de préférence, les chambres de compensation de pression (37) sont prévues sur les arêtes externes de délimitation du disque inférieur de guidage (23) et du disque supérieur de guidage (24) et sont ouvertes vers l'extérieur.

8. Robinet-mélangeur sanitaire selon l'une quelconque des revendications 1 à 7, **caractérisé en ce que** l'élément de réglage (39) dépendant de la température est, de préférence, réalisé en forme cylindrique et le disque de réglage (25) est réalisé en forme de U.

9. Robinet-mélangeur sanitaire selon l'une quelconque des revendications 1 à 8, **caractérisé en ce que** le disque inférieur de guidage (23) et le disque supérieur de guidage (24) sont écartés l'un de l'autre par intercalage de manchons d'écartement (52) et la longueur des manchons d'écartement (52) garantit l'écartement requis pour la mobilité du disque de réglage (25) entre le disque inférieur de guidage (23) et le disque supérieur de guidage (24).

10. Robinet-mélangeur sanitaire selon l'une quelconque des revendications 1 à 9, **caractérisé en ce qu'**on prévoit un étrier (41) qui enserre l'ensemble des disques, un ressort de rappel (44), le disque de réglage (25) et l'élément de réglage (39) dépendant de la température étant encastrés entre les deux branches (42, 43) de l'étrier et, de préférence, une branche (43) de l'étrier présente une vis de réglage.

**Claims**

1. Sanitary mixing valve with thermostatic control, having an actuation member, a fixed valve seat disc (20), a stack of discs which can be moved on the valve seat disc (20) for quantity control, and a temperature-dependent control member (39), wherein the valve seat disc (20) has a hot water inlet aperture (21) and a cold water inlet aperture (22), wherein the stack of discs comprises a lower guide disc (23), an upper guide disc (24) and a control disc (25) provided between the lower guide disc (23) and the upper guide disc (24), wherein the lower guide disc (23) and the control disc (25) have passages (28, 29 ; 33, 34) communicating with the hot water inlet aperture (21) and the cold water inlet aperture (22) of the valve seat disc (20), and the upper guide disc (24) has pressure compensating chambers (36) communicating with the passages (33, 34) of the control disc (25), and wherein the control disc (25) can be set into a temperature-determining starting position in a plane parallel to the surface of the guide discs (23, 24) for temperature control by means of the actuation member, and can be controlled by means of the temperature-dependent control member (39) for temperature regulation, characterised in that in the control disc (25) there is provided at least one mixing chamber (35) communicating with the passages (28, 29) of the lower guide disc (23) and/or with the pressure compensating chambers (36) of the upper guide disc (24), and the temperature-dependent control element (39) is arranged in the mixing chamber (35) of the control disc (25) and/or in a recess (32) of the control disc (25) communicating with the mixing chamber (35), and in that partial amounts of the cold water and of the hot water enter the mixing chamber (35) and the mixed water flows round the control element (39).

2. Sanitary mixing valve according to claim 1, characterised in that in the control disc (25) there are provided a mixing chamber (35) communicating with the passages (28, 29) of the lower guide disc (23) and a mixing chamber (35) communicating with the pressure compensating chambers (36) of the upper guide disc (24), the two mixing chambers (35) open into a recess (32) of the control disc (25) and the temperature-dependent control member (39) is arranged in the mixing chambers (35) and/or in the recess (32) of the control disc (25).

3. Sanitary mixing valve according to claim 1 or 2, characterised in that woven material is inserted into the mixing chamber (35) or the mixing chambers (35).

4. Sanitary mixing valve according to one of claims 1 to 3, characterised in that the lower guide disc (23) and the control disc (25) each have four passages (28 and 29 ; 33 and 34), and two passages (28 and 29) in each case communicate with the hot water inlet aperture (21) and the cold water inlet aperture (22) respectively of the valve seat disc (20), and in that on its side facing the valve seat disc (20) the lower guide disc (23) preferably has inlet slots (26, 27) associated with the hot water inlet aperture (21) and the cold water inlet aperture (22) of the valve seat disc (20), and a passage (28, 29) extends from the outer end of each inlet slot (26, 27).

5. Sanitary mixing valve according to one of claims 1 to 4, characterised in that on their side facing the control disc (25) the passages (28, 29) of the lower guide disc (23) have widened regions (30) and these widened regions (30) communicate with the mixing chambers (35) of the control disc (25).

6. Sanitary mixing valve according to claim 4 or 5, characterised in that on its side facing the control disc (25) the upper guide disc (24) has pressure compensating chambers (36) associated with the four passages (33, 34) of the control disc (25).

7. Sanitary mixing valve according to one of claims 1 to 6, characterised in that on their sides facing the control disc (25) the lower guide disc (23) and the upper guide disc (24) each have further pressure compensating chambers (37) for partial quantities of the cold water and of the hot water, and preferably the pressure compensating chambers (37) are provided on the outer boundary edges of the lower guide disc (23) and the upper guide disc (24) and are open to the outside.

8. Sanitary mixing valve according to one of claims 1 to 7, characterised in that the temperature-dependent control member (39) is preferably of cylindrical shape and the control disc (25) is of U-shaped construction.

9. Sanitary mixing valve according to one of claims 1 to 8, characterised in that the lower guide disc (23) and the upper guide disc (24) are braced with respect to each other with spacer sleeves (52) interposed, and the length of the spacer sleeves (52) ensures the necessary space between the lower guide disc (23) and the upper guide disc (24) for slidability of the control disc (25).

10. Sanitary mixing valve according to one of claims 1 to 9, characterised in that there is provided a clamp (41) engaging over the stack of discs, and clamped between the two arms of the clamp (42, 43) are a return spring (44), the control disc (25) and the temperature-dependent control member (39), and preferably one arm of the clamp (43) has an adjustment screw.

Fig. 1

EP 0 342 709 B1

*Fig. 1a*

Fig. 2

Fig. 4

Fig. 3a

Fig. 3b